Europäisches Patentamt

European Patent Office

Office européen des brevets

(11) Publication number: **0 284 689**
**A2**

(12) **EUROPEAN PATENT APPLICATION**

(21) Application number: 87310310.5

(51) Int. Cl.⁴: **G01N 29/04**

(22) Date of filing: 23.11.87

(30) Priority: 31.03.87 JP 78107/87

(43) Date of publication of application:
05.10.88 Bulletin 88/40

(84) Designated Contracting States:
DE FR GB IT NL SE

(71) Applicant: SUZUKO PRECISION IND. CO., LTD.
No. 28-13, Ginza 1-chome Chuo-ku
Tokyo(JP)

Applicant: SHIN-NISSAN DIAMOND TOOLS
MFG. CO., LTD.
No. 2-30 Torihamacho Kanazawa-ku
Yokohama-shi Kanagawa-ken(JP)

(72) Inventor: Satow, Yoshinobu
No. 23-5 Yotsuyakamicho Kawasaki-ku
Kawasaki-shi Kanagawa-ken(JP)
Inventor: Satow, Yoshiyuki
Sunrise Omori 201,No. 3-43 Haramachi
Isogo-ku
Yokohama-shi Kanagawa-ken(JP)

(74) Representative: Pearce, Anthony Richmond et
al
MARKS & CLERK Alpha Tower Suffolk Street
Queensway Birmingham B1 1TT(GB)

(54) Ultrasonic probe.

(57) The present invention provides an ultrasonic probe having an intermediate medium made of a total aromatic polyimide resin produced through polycondensation of biphenly tetracarboxylic acid dianhydride and aromatic diamine, said intermediate medium being a wedge member, lens, contact shoe or delay member which is especially excellent in signal to noise ratio. The ultrasonic probe can be used to detect any flaw in an object stably, accurately and efficiently.

FIG. I (A)

## ULTRASONIC PROBE

## BACKGROUND OF THE INVENTION

Field of the Invention:

The present invention relates to a probe destined for use in an ultrasonic testing to detect or measure the location, size, shape, etc. of any flaw in a metallic, plastic or the like material.

Description of the Prior Art:

It is well known to utilize ultrasound for detection of any flaw in a metallic material or any other material. For any metallic or plastic material of a higher grade, it is more strictly required because of its added value that it should be free from any flaw therein. Therefore, a higher accuracy is imposed on the ultrasonic testing. If any defect or flaw is found in such an object, the latter is rejectable since the flaw will have an adverse affect on the mechanical strength of the object as a material. In the modern nondestructive testing, especially for any flaw of a small volume on which stress is likely to concentrate, that is, a planar flaw, the ultrasonic flaw detection is widely prevailing because of its reliability including the accuracy of flaw detection, efficiency of testing, etc.

Generally, the ultrasonic flaw detection greatly depends upon the following for improvement of the accuracy of flaw detection:
(1) Manner of signal processing in the ultrasonic flaw detector;
(2) Manner of pretreating an object under test; and
(3) Manner of holding the probe.

However, the accuracy of flaw detection most depends upon the signal to noise ratio of a probe use.

Heretofore, the wedge member, one of the main members as intermediate media, of an ultrasonic probe, is made of an acrylic resin which is relatively stable in various properties. However, since the acrylic resin has a deflection of temperature under load as low as 80 to 125 °C, when it is in contact with an object under test at a high temperature, the ultrasound incident upon it is greatly attenuated so that the flaw-detecting sensitivity of the probe becomes considerably low and that the transducer is separated due to deformation under heat and the lead wires come off. Say, the durability of the acrylic resin-made probe is poor. Especially in an oblique probe, the refractive angle for flaw detection is changed, thus deteriorating extremely the accuracy of flaw detection.

Also, when the ultrasonic flaw detection was made at a normal temperature or at a low temperature, the acrylic resin was found not to meet any of the required attenuation of ultrasound, abrasion resistance, absorption coefficient and sensitivity of flaw detection. The acrylic resin is low in abrasion resistance among others. In many cases of continuous ultrasonic flaw detection, the probe adaptor consisting of a probe shoe, guide ring and others is slid directly on the object under test. In such cases, the adaptor is extremely consumed due to the sliding friction on the object, so that it is necessary to replace the probe shoe with a new one in a very short time. Such replacement causes a large time loss and economic loss, and it also has a considerable influence on the accuracy of flaw detection as well.

On the other hand, a probe for detection of any flaw in a hot material or object has been proposed whic uses a wedge made of a heat-resistant resin ("VESPEL", a PMDA polyimide by Du Pont). However, this probe made of a PMDA polyamide resin produced through polymerization of pyromellitic acid dianhydrid (PMDA) and aromatic diamine can withstand a high temperature, but as described in the Japanese Examined Patent Publication No. 57-44142, the ultrasound is greatly attenuated and so the sensitivity of flaw detection is deteriorated. And as it is used for a long time, it is easily deformed under heat, and also it is low in durability. Furthermore, the material or object itself of the probe is so expensive that it has not yet been popular in a wide field of industry.

In these circumstances, many researchers have been making efforts to find a new material usable in lieu of for such acrylic resin or PMDA polyamide resin, but although a material which can solve the problem of ultrasound attenuation for improved signal to noise ratio was found, it could not have the overall improved properties such as absorption coefficient, deformation under heat, abrasion resistance, etc. which has a malinfluence on the sound velocity or angle of ultrasound incidence. This is because it has not yet been widely used in place of the conventional acrylic resin or PMDA polyimide resin.

## SUMMARY OF THE INVENTION

The present invention has an object to overcome the above-mentioned drawbacks of the conventional techniques by providing an ultrasonic probe having an intermediate medium such as a wedge member, lens, shoe or delay member, in which the basic noise is extremely low, the ultrasound is less attenuated at a normal, high or low temperature, the absorption coefficient is excellent, no deformation under heat occurs, the rigidity and impact strength are sufficient and the abrasion resistance is so high as to permit a long-time use.

The above object can be attained by providing an ultrasonic probe having an intermediate medium made of a BPDA polyimide resin produced through polycondensation of biphenyl tetracarboxylic acid dianhydride (BPDA) and aromatic diamine, which can solve the above-mentioned problems of the conventional techniques and permits a highly accurate ultrasonic flaw detection.

These and other objects and advantages of the present invention will be better understood from the ensuing description made by way of example with reference to the drawings.

## BRIEF DESCRIPTION OF THE DRAWINGS

Figures show an embodiment of the present invention, of which,

Figures 1A and 1B are sectional views, respectively, of oblique probes;

Figure 2 is also a sectional view of a split-type vertical probe;

Figure 3 is a sectional view of a water-immersed type probe;

Figure 4 is a graph showing the ultrasound attenuations of various materials;

Figure 5A compares the split-type probes for sensitivity; and

Figure 5B and 5C show waveforms, respectively, displayed on the A scope.

## DETAILED DESCRIPTION OF THE PREFERRED EMBODIMENTS

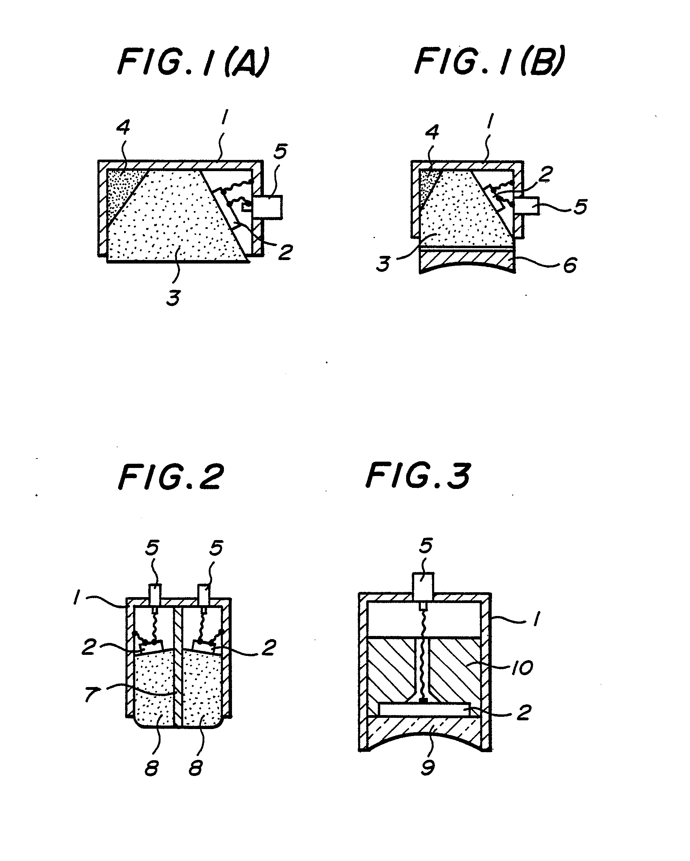

Referring now to Figures 1A and 1B showing sectional views of oblique probes, the reference numeral 1 indicates a probe, 2 a transducer, 3 a wedge member as one of intermediate media according to the present invention, 4 a sound absorbing member, 5 a connector and 6 a contact shoe. Figure 2 shows a split-type probe. The similar elements to those in Figures 1A and 1B will not be described herein. The numeral 7 indicates an acoustic splitting surface and 8 a delay member. In Figure 3 showing a sectional view of a water-immersed type probe, the numeral 9 indicates a lens and 10 a damper. The intermediate medium is made by forming through compression molding at a high temperature under a high pressure by the hot-press method a powdered polymer of total aromatic polyimide resin produced through polycondensation of biphenyl tetracarboxylic acid dianhydride and aromatic diamine. When this intermediate medium is used with an ultrasonic probe, it is much superior in various properties to the conventional acrylic resin-made one or PMDA polyimide resin-made one, typically, "VESPEL" (trade name) as will be described later and so can solve all the problems of the conventional techniques.

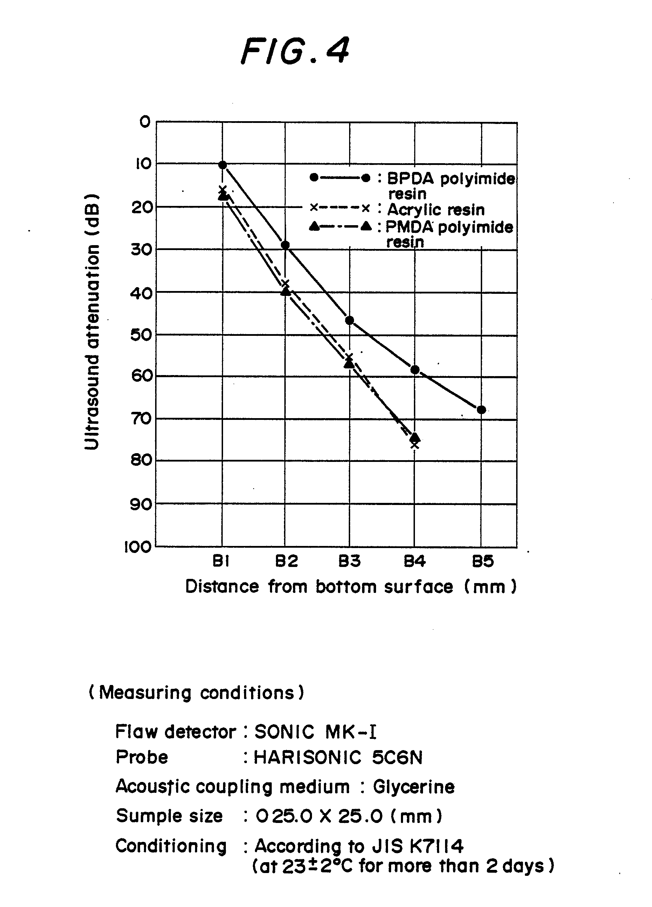

Table 1 shows the comparison in ultrasonic properties between the BPDA polyimide resin according to the present invention and the conventional acrylic resin and PMDA polyimide resin. As seen from this Table 1 and Figure 4 which graphically shows the attenuation of ultrasound in each of the materials, the BPDA polyimide resin according to the present invention is excellent in that the attentuation of ultrasound having an affect on the signal to noise ratio among the properties required for the wedge member of the ultrasonic probe.

It is well known that the majority of the ultrasound attenuation in a plastic material is caused by the enegry loss due to the internal friction. The molecular structure of the BPDA polyimide according to the present invention consists of rigid long-chain segments of a larger molecular weight than the acrylic resin and PMDA polyimide. Since the internal friction due to the ultrasonic oscillation of the molecular chain is difficult to take place, the attenuation of ultrasound is rather low. The high modulus of elasticity, high heat resistance, high abrasion resistance and other advantages of the BPDA polyimide are also due to the rigid molecular structure thereof. As also apparent from Table 1, the modulus of elasticity of the BPDA polyimide is rather higher than that of the PMDA polyimide, which proves that the BPDA polyimide has a more rigid molecular structure. Therefore, it is obvious that the BPDA polyimide resin is superior in ultrasound attenuation to the PMDA polyimide resin.

Also, the BPDA polyimide resin represents an excellent properties at a low temperature as well as at a high temperature, and since it has nearly a same mechanical strength at a low temperature of -50°C as at the normal temperature, it permits a flaw detection at a low temperature.

As seen from Table 1, the BPDA polyimide resin is somewhat lower in sound velocity than the acrylic resin. So according to the following Snell's equation, it is shown that when the BPDA polyimide resin is used for making an oblique probe, the shift of refractive angle due to the abrasion of the wedge surface is larger than that of the acrylic resin but much superior in abrasion resistance to the acrylic resin (more than a hundred times as shown by the experiments on the rounded contact shoe for manually-operated ultrasonic flaw detecting pipe).

$$CI/\sin i = CII/\sin Q$$

where CI : Vertical sound velocity in first medium (BPDA or acrylic resin)

CII : Horizontal sound velocity in second medium (steel)

sin i : Incident angle of first vertical wave

sin Q : Incident angle of seond horizontal wave

Thus, the large shift of refractive angle is canceled by the latter advantage and also because of the low sound velocity in it, the incident angle is smaller than that in the acrylic resin so that the thickness of the wedge layer can be reduced. Therefore, the BPDA polyimide resin according to the present invention is further more advantageous in range attenuation.

## Table 1

| Item Material | Density $10^3$ kg/m$^2$ | Sound velocity m/s | | Acoustic impedance with respect to vertical wave | Attenuation dB/cm 25 mm B1-5 MHz |
|---|---|---|---|---|---|
| | | Vertical wave | Horizon-tal wave | | |
| BPDA polyimide resin | 1.40 | 2450 | 1060 | 3230  $10^3$ kg/m$^2$ s | 2.1 |
| Acrylic resin | 1.18 | 2750 | 1390 | 3245  $10^3$ kg/m$^2$ s | 3.1 |
| PMDA polyimide resin | 1.43 | 2410 | 970 | 3446  $10^3$ kg/m$^2$ s | 3.4 |

Measuring conditions:
. Flaw detector used : SONIC MK-I
. Probe used : HARISONIC 5C6N, 5C6N (Y)
. Acoustic coupling medium : Glycerine and millet jelly
. Sample size : ∅25.0 × 25.0 mm
. Conditioning : According to JIS K7114 (at 23 2°C for more than 2 days)

Table 2 shows the comparison in sensitivity between the oblique probes. In this Table 2, the materials are compared with each other for A1 sensitivity, A2 sensitivity, resolution and dead zone according to the attached sheet No. 5 of JIS Z2344. The sensitivity is 10 dB for A1 and 6 dB for A2, the 13 dB for the resolution, and the miscellaneous echo within the wedge can be controlled for the dead zone. The resin according to the present invention is proved to be superior in all these respect to the acrylic resin.

## Table 2

| Item<br>Material<br>(wedge) | Refractive angle | A1 sensi-tivity | A2 sensi-tivity | Resolution | Dead zone |
|---|---|---|---|---|---|
| BPDA polyimide resin | 25.1° | 65 dB | 52 dB | 45 dB | 0 mm |
| Acrylic resin | 45.1° | 55 dB | 46 dB | 32 dB | 7 mm |
| (differ-ence) | 0 | 10 dB | 6 dB | 13 dB | 7 mm |

Measuring conditions:
. Flaw detector used : SONIC MK-I
. Probe used : HARISONIC 5C6 × 6N
. Acoustic coupling medium : Glycerine
. Sample size : Wedge of 45° in refractive angle
. Conditioning : According to JIS K7114 (at 23 2°C for more than 2 days)

Table 3 shows the properties of the BPDA polyimide resin, PMDA polyimide resin and acrylic resin. As obvious from this Table 3, the BPDA polyimide resin according to the present invention is also superior in the absorption coefficient which affects the incident angle of ultrasound. Also it proves that because of its properties, the BPDA polyimide resin according to the present invention can be used at a high, normal or low temperature.

Table 3

| | Test method according to ASTM | Unit | Temperature | BPDA polyimide resin | PMDA polyimide resin | Acrylic resin |
|---|---|---|---|---|---|---|
| Bending strength | D 790 | kg/cm$^2$ | 25°C | 1640 | 1330 | 914∿1195 |
| | | | 260°C | 600 | 770 | Not good |
| Young's modulus in flexure | D 790 | kg/cm$^2$ | 25°C | 42500 | 31500 | ——— |
| | | | 260°C | 21300 | 17500 | Not good |
| Tensile strength | D 638 | kg/cm$^2$ | | 1180 | 875 | 492∿773 |
| Elongation | D 638 | % | | 5.0 | 7.5 | 3∿10 |
| Tensile modulus | D 638 | kg/cm$^2$ | | 39900 | ——— | 31635 |
| Deflection temperature under load | D 648 | °C | | ∿390 | ∿360 | 71∿91 |
| Hardness | D 785 | HRM | | 114 | 102 | 85∿105 |
| Specific gravity | D 792 | g/cm$^2$ | | 1.40 | 1.43 | 1.23 ∿ 1.34 |
| Chemical resistance | D 543 | | | Excellent | Excellent | Good |
| Absorption coefficient | JIS K7114 | % | 23±2°C | 0.496 | 0.499 | 0.640 |

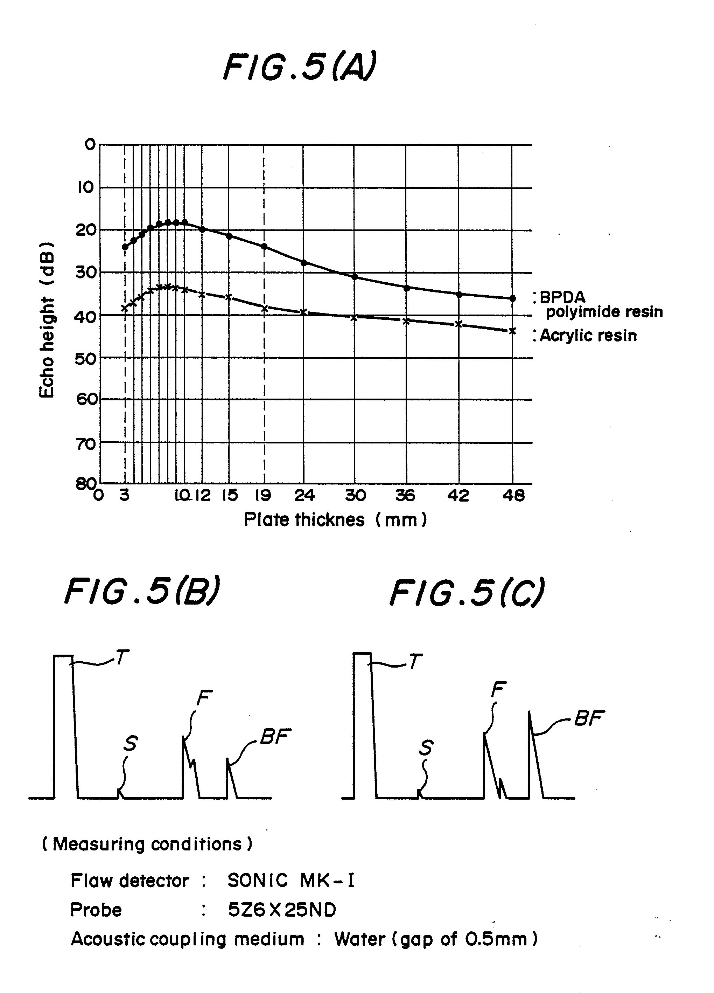

Figure 5A shows the comparison in sesitivity between the split-type vertical probes made of BPDA polyimide and acrylic resins, respectively, which are intended for use to detect with a high sensitivity any flaw (lamination) in a steel plate of 4.7 to 16.0 mm in thickness. As obvious from this Figure, the BPDA polyimide resin is superior in sensitivity more than 10 dB to the acrylic resin. Figures 5B and 5C show waveforms, respectively, displayed on the A-scope of a monitor of an ultrasonic flaw detector of which the accuracy of detection is specified in JIS STBNI. In Figures 5B and 5C, T indicates a pulse, S an echo from the surface of an object, F an echo from a flaw and BF an echo from bottom surface of the object. As shown, the F/BF of the BPDA polyimide resin is -2 dB, while the F/BF of the acrylic resin is +3 dB, which proves that the flaw can be detected with a high sensitivity by an ultrasonic probe having an intermediate medium made of the BPDA polyimide resin.

As having been described in the foregoing, since the intermediate medium made as molded of the BPDA polyimide resin according to the present invention attenuates the incident ultrasound very little and is excellent in absorption coefficient, it is much improved in signal to noise ratio as compared with the intermediate medium made of a conventional acrylic resin or PMDA polyimide resin, thus having a much increased sensitivity of flaw detection. Further, since the BPDA polyimide resin is high in deflection temperature under load, it is possible to detect a flaw in an hot object. Also because of the excellent low-temperature resistance, detection can be done for any flaw in a coid object. Furthermore, the BPDA polyimide resin is also excellent in abrasion resistance, the intermediate medium can be used stably for a long time, the efficiency of testing is considerably improved. Thus, any flaw existent inside an object can be detected with a high accuracry irrespectively of the conditions of the object under test. Moreover, since the molding of the BPDA polyimide resin according to the present invention can be well finished by grinding, it can be accomodated in a probe case with a high precision.

The intermediate medium according to the present invention can be used to make the wedge member, shoe, lens and delay member. Of course, it is further usable to make a medium for interposition between the probe and an object under test. As apparent to those skilled in the art, these intermediate media are aslo covered by the present invention.

**Claims**

1. An ultrasonic probe having an intermediate medium made of a total aromatic polyimide resin produced through polycondensation of biphenyl tetracarboxylic acid dianhydride and aromatic diamine.

2. An ultrasonic probe according to Claim 1, wherein said intermediate medium is a wedge member.

3. An ultrasonic probe according to Claim 1, wherein said intermediate medium is a lens.

4. An ultrasonic probe according to Claim 1, wherein said intermediate medium is a contact shoe.

5. An ultrasonic probe according to Claim 1, wherein said intermediate medium is a delay member.

# FIG. 1 (A)

# FIG. 1 (B)

# FIG. 2

# FIG. 3

# FIG.4

(Y-axis) Ultrasound attenuation (dB)

Legend:
●——● : BPDA polyimide resin
×----× : Acrylic resin
▲—·—▲ : PMDA polyimide resin

(X-axis) Distance from bottom surface (mm)
B1  B2  B3  B4  B5

(Measuring conditions)

Flow detector : SONIC MK-I
Probe          : HARISONIC 5C6N
Acoustic coupling medium : Glycerine
Sumple size   : O 25.0 X 25.0 (mm)
Conditioning  : According to JIS K7114
              (at 23±2°C for more than 2 days)

# FIG.5(A)

Echo height (dB) vs Plate thicknes (mm)

: BPDA polyimide resin
: Acrylic resin

# FIG.5(B)

# FIG.5(C)

( Measuring conditions )

Flaw detector : SONIC MK-I

Probe : 5Z6 X 25ND

Acoustic coupling medium : Water (gap of 0.5mm )